# Europäisches Patentamt

# European Patent Office

# Office européen des brevets

(19)

(11) Veröffentlichungsnummer: **0 041 705**
**B1**

(12) **EUROPÄISCHE PATENTSCHRIFT**

(45) Veröffentlichungstag der Patentschrift:
27.12.84

(51) Int. Cl.³: **G 11 B 17/04,** G 11 B 17/02

(21) Anmeldenummer: 81104325.6

(22) Anmeldetag: 04.06.81

(54) **Einschubvorrichtung für scheibenförmige Aufzeichnungsträger in ein Laufwerk.**

(30) Priorität: 09.06.80 DE 3021604

(43) Veröffentlichungstag der Anmeldung:
16.12.81 Patentblatt 81/50

(45) Bekanntmachung des Hinweises auf die Patenterteilung:
27.12.84 Patentblatt 84/52

(84) Benannte Vertragsstaaten:
FR GB IT NL SE

(56) Entgegenhaltungen:
DE - U - 7 711 965
US - A - 3 390 643
US - A - 3 940 793

(73) Patentinhaber: **Siemens Aktiengesellschaft, Berlin und München Wittelsbacherplatz 2, D-8000 München 2 (DE)**

(72) Erfinder: **Vorbach, Günther, Sudetenstrasse 5, D-8255 Schwindegg (DE)**
Erfinder: **Böhmer, Georg, Ing.grad., Lustheimstrasse 8, D-8000 München 60 (DE)**

ACTORUM AG

## Beschreibung

Die Erfindung betrifft eine Einschubvorrichtung gemäss dem Oberbegriff des Patentanspruches 1.

Laufwerke mit scheibenförmigen Aufzeichnungsträgern, sogenannte «Floppy-Disk-Laufwerke», sind allgemein bekannt und werden in zunehmendem Masse als Speicher in Verbindung mit Druckeinrichtungen verwendet. Sie weisen im allgemeinen eine schlitzförmige Aufnahmeführung auf, in die der mit einer Hülle versehene scheibenförmige Aufzeichnungsträger gesteckt wird, wobei nach Einführung des scheibenförmigen Aufzeichnungsträgers die aus magnetisierbarem Material bestehende Scheibe in Kraftschluss mit einer Antriebsvorrichtung gebracht wird, die die Scheibe auf die erforderliche Umdrehungsgeschwindigkeit bringt.

Infolge der hohen Speicherdichte ist es erforderlich, die Scheibe exakt zu justieren, was im allgemeinen über Anschläge erfolgt. Dabei darf die Antriebseinrichtung erst dann in die im Aufzeichnungsträger angebrachte zentrale Öffnung eingreifen, wenn sich der Aufzeichnungsträger selbst in Betriebsposition befindet.

So ist aus der DE-U 7 711 965 ein Laufwerk für flexible Aufzeichnungsträger bekannt, bei dem in der Verschlussklappe eine Blattfeder angeordnet ist, die dazu dient, den noch nicht vollständig in das Laufwerk eingeschobenen Aufzeichnungsträger bis in die Betriebsposition schonend zu verschieben. Ein an der Verschlussklappe angebrachter Nocken dient dazu, mit schliessender Klappe den erforderlichen Kraftschluss zwischen der Antriebseinrichtung und dem Aufzeichnungsträger zu bewirken.

Es ist weiters aus der US-PS 3 940 793 eine Positioniereinrichtung für den scheibenförmigen Aufzeichnungsträger in einem Laufwerk bekannt, bei dem der scheibenförmige Aufzeichnungsträger entgegen einer federnden Rastanordnung in das Laufwerk eingeführt und hinter einer Rastkante verrastet wird. Die Rastfederanordnung hält dabei in Betriebsposition den scheibenförmigen Aufzeichnungsträger hinter der Rastkante fest.

In beiden Fällen ist das Einschieben bzw. Herausnehmen des scheibenförmigen Aufzeichnungsträgers in bzw. aus dem Laufwerk ergonomisch ungünstig.

Aufgabe der Erfindung ist es, für ein Laufwerk mit scheibenförmigen Aufzeichnungsträgern eine Einschubvorrichtung bereitzustellen, die einerseits den Aufzeichnungsträger zum Einlegen bzw. Herausnehmen in ein Laufwerk bedienungsfreundlich positioniert, andererseits aber den Aufzeichnungsträger endgültig durch einfaches Schliessen einer Verschlussklappe positioniert und gleichzeitig den Kraftschluss zwischen der Antriebsvorrichtung und dem Aufzeichnungsträger bewirkt.

Diese Aufgabe wird gemäss dem kennzeichnenden Teil des Patentanspruches 1 gelöst.

Weitere vorteilhafte Ausführungsformen der Erfindung sind in den Unteransprüchen gekennzeichnet.

Ausführungsformen der Erfindung sind in den Zeichnungen dargestellt und werden im folgenden beispielsweise näher beschrieben.

Es zeigen

Fig. 1 eine schematische Darstellung der Einschubvorrichtung mit geöffneter Verschlussklappe,

Fig. 2 eine schematische Darstellung der Einschubvorrichtung mit geschlossener Verschlussklappe und

Fig. 3 eine schematische Darstellung der Einschubvorrichtung in Frontansicht.

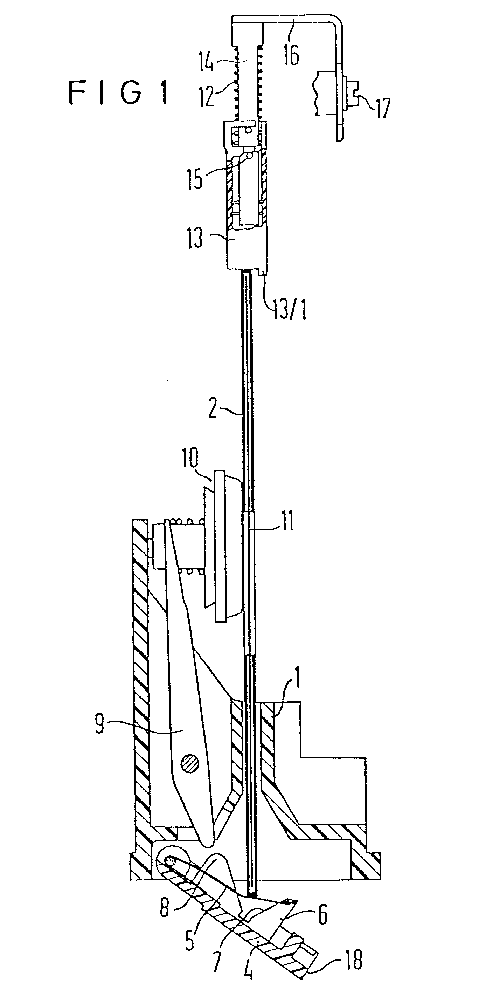

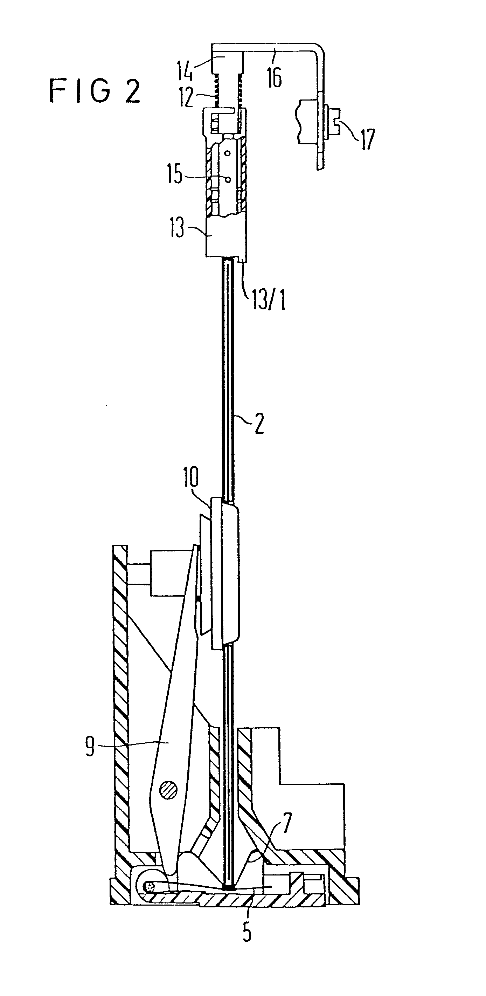

Ein hier nicht im einzelnen dargestelltes Laufwerk für einen scheibenförmigen Aufzeichnungsträger weist eine schlitzförmige Aufnahmeführung 1 zum Einschieben eines mit einer Hülle versehenen Aufzeichnungsträgers 2 (Floppy-Disk) auf. Dieses Einlegen erfolgt mit der in den Fig. 1 bis 3 dargestellten Einschubvorrichtung. Sie besteht aus einer mit einer Griffmulde 3 versehenen schwenkbaren Verschlussklappe 4 mit einem Schliessfederelement 5. Das Schliessfederelement 5 ist in einem Federkasten 6 angeordnet, der Führungsschrägen 7 zur Aufnahme des Aufzeichnungsträgers aufweist. Die Klappe 4 arbeitet über einen Nocken 8 mit einer Zentriereinrichtung zusammen, die aus einem Hebel 9 mit zugeordnetem Mitnehmerteil 10 besteht. Beim Schliessen der Klappe 4 wird über den Hebel 9 das Mitnehmerteil 10 in die auf dem Aufzeichnungsträger angeordnete zentrale Öffnung 11 eingeführt und damit ein Kraftschluss zwischen einer hier nicht dargestellten Antriebsvorrichtung und dem Aufzeichnungsträger erzeugt.

Im Bereich des hinteren Endes der Aufnahmeführung 1 ist ein durch den Aufzeichnungsträger 2 entgegen einer Federkraft 12 verschiebbarer Anschlag 13 angeordnet. Der Anschlag 13 selbst ist verschieblich auf einer Führungsleiste 14 angeordnet, die Anschlagnippel 15 aufweist, die den Verschiebebereich des Anschlages 13 begrenzen. Die Führungsleiste 14 selbst wiederum ist Teil einer am Gehäuse befestigten Justierplatte 16, die über Langlochschrauben 17 justiert werden kann.

Die eigentliche Funktion der Einschubführungsvorrichtung ist dabei wie folgt:

Im geöffneten Zustand der Klappe 4 wird der mit einer Hülle versehene scheibenförmige Aufzeichnungsträger 2 solange in die schlitzförmige Aufnahmeführung 1 des Laufwerkes eingeführt, bis er an dem Anschlag 13 anstösst und dann auf einem Vorsprung 13/1 des Anschlages aufliegt. Die Länge des Anschlages 13 ist so bemessen, dass der Aufzeichnungsträger 2 mit seiner Vorderkante so weit aus dem Gehäuse des Laufwerkes ragt, dass er von der Bedienungsperson leicht gehalten werden kann. Beim Schliessen der Klappe 4 legt sich gemäss der Darstellung der Fig. 1 zunächst das Schliessfederelement 5 an dem Aufzeichnungsträger 2 an. Beim weiteren Schliessen der Klappe 4 gleitet der Aufzeichnungsträger 2 entlang den Führungsschrägen 7 des Federgehäuses 6. Die Feder des Schliessfederelementes 5 ist hinsichtlich ihrer Federkraft stärker ausgeführt als die Feder des Anschlages 12, wobei das Verhältnis ca 3:1 beträgt. Damit wird erreicht, dass beim Schliessen der Klappe 4 das Schliessfederelement 5 den Aufzeichnungsträger 2 zunächst entgegen der Feder 12 in die durch Anschlag an den Anschlagnippeln 15 definierte Betriebsposition schiebt und erst dann über den Steuernocken 8 in Verbindung mit dem Hebel 9 über das Mitnehmerelement 10 ein Kraftschluss zwischen der Antriebseinrichtung und dem Aufzeichnungsträger 2 bewerkstelligt wird.

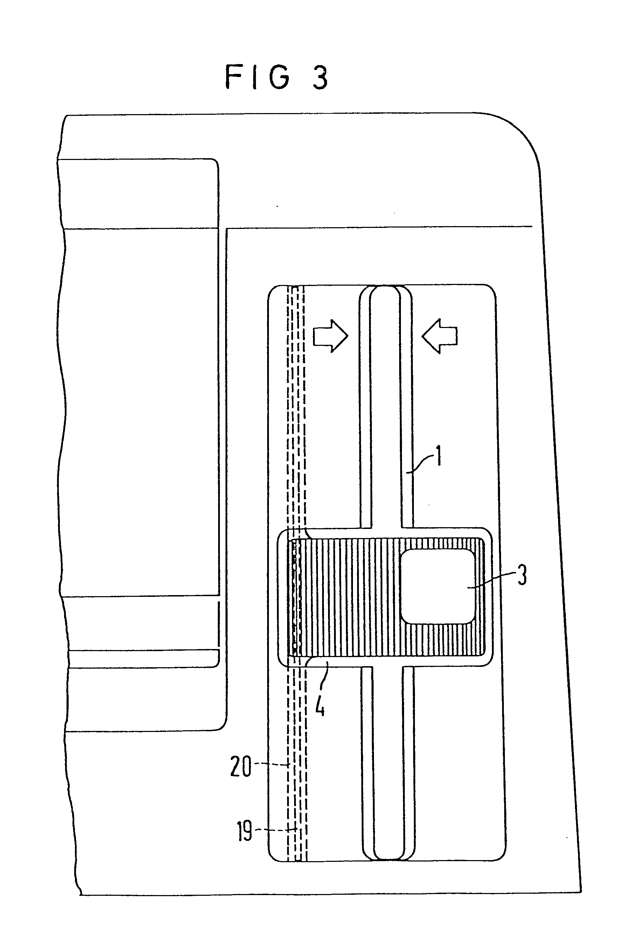

Zum Herausnehmen des scheibenförmigen Aufzeichnungsträgers 2 wird die Verschlussklappe 4 erneut geöffnet, womit die Antriebseinrichtung 10 den scheibenförmigen Aufzeichnungsträger 2 freigibt und dieser über die Feder des Anschlages 13 soweit aus dem Laufwerk geschoben wird, dass er ohne weiteres von der Bedienungsperson ergriffen werden kann. Die Klappe 4 selbst wird beim Schliessen entgegen einer hier nicht dargestellten Federkraft verschwenkt und über eine Verschlusseinrichtung 18 verschlossen. Entsprechend der Darstellung der Fig. 3 überspannt die Klappe 4 die Einschuböffnung 1 in ihrem zentralen Bereich, wobei sie eine ergonomisch richtige Griffbreite von etwa der Breite eines Daumens aufweist.

Um trotz der etwa nur daumenbreiten Ausführung der Verschlussklappe 4 die Verschlussklappe 4 verwindungsfrei und damit betriebssicher ausbilden zu können, wird die Verschlussklappe 4 über eine längs der Einschuböffnung angeordnete, im Gehäuse verrastbare Achse 19 geführt. Der Fuss 20 der Verschlussklappe umfasst die Achse 19 über ihre ganze Länge halbkreisförmig.

Bezugszeichen

| | |
|---|---|
| 1 | schlitzförmige Aufnahmeführung |
| 2 | Aufzeichnungsträger |
| 3 | Griffmulde |
| 4 | Verschlussklappe |
| 5 | Schliessfederelement |
| 6 | Federkasten |
| 7 | Führungsschrägen |
| 8 | Nocken |
| 9 | Hebel |
| 10 | Mitnehmerteil |
| 11 | zentrale Öffnung |
| 12 | Feder |
| 13 | Anschlag |
| 13/1 | Vorsprung am Anschlag |
| 14 | Führungsleiste |
| 15 | Anschlagnippel |
| 16 | Justierplatte |
| 17 | Langlochschrauben |
| 18 | Verschlusseinrichtung |
| 19 | Achse |
| 20 | Fuss der Verschlussklappe |

**Patentansprüche**

1. Einschubvorrichtung für scheibenförmige Aufzeichnungsträger (2) in einem Laufwerk mit schlitzförmiger Aufnahmeführung (1) unter Verwendung einer über eine Verschlussklappe (4) betätigbaren, im Betriebszustand in eine zentrale Öffnung (11) des Aufzeichnungsträgers (2) eingreifende Antriebseinrichtung (10), wobei im Bereich des hinteren Endes der Aufnahmeführung ein durch den Aufzeichnungsträger (2) entgegen einer Federkraft (12) verschiebbarer, beim Einschieben des Aufzeichnungsträgers gegen weitere der Betriebsposition des Aufzeichnungsträgers zugeordnete Rastanschläge (15) auflaufender Anschlag (13) angeordnet ist, dadurch gekennzeichnet, dass die Verschlussklappe (4) ein Schliessfederelement (5) aufweist, dass derart ausgebildet ist, dass beim Schliessen der Verschlussklappe (4) das Schliessfederelement (5) den Aufzeichnungsträger (2) zunächst erfasst und entgegen der Anschlagsfederkraft (12) gegen den Rastanschlag (15) drückt, und dass dann bei weiterem Schliessen der Verschlussklappe (4) die Antriebseinrichtung (10) in die zentrale Öffnung (11) des Aufzeichnungsträgers (2) eingreift, wobei der Verschiebebereich des Anschlages (13) so ausgelegt ist, dass im geöffneten Zustand der Verschlussklappe (4) der Aufzeichnungsträger (2) in einer definierten Greiflage aus der Aufnahmeführung (1) ragt.

2. Einschubvorrichtung nach Anspruch 1, dadurch gekennzeichnet, dass der Anschlag (13) auf einer den Verschiebebereich mittels der Rastanschläge begrenzenden, die Feder (12) tragenden Führungsleiste (14) angeordnet ist.

3. Einschubvorrichtung nach Anspruch 2, dadurch gekennzeichnet, dass die Führungsleiste (14) als Teil einer am Gehäuse befestigten Justierplatte (16) ausgebildet ist.

4. Einschubvorrichtung nach einem der Ansprüche 1 bis 3, dadurch gekennzeichnet, dass das Schliessfederelement (5) auf der Verschlussklappe (4) in einem mit Führungsschrägen (7) für den Aufzeichnungsträger (2) versehenen Federkasten (6) angeordnet ist.

5. Einschubvorrichtung nach einem der Ansprüche 1 bis 4, dadurch gekennzeichnet, dass die entgegen einer Federkraft schwenkbare Verschlussklappe (4) die ansonsten frei zugängliche Aufnahmeführung (1) zentral in etwa Daumenbreite überspannt.

6. Einschubvorrichtung nach einem der Ansprüche 1 bis 5, dadurch gekennzeichnet, dass auf der Verschlussklappe (4) gegenüber der Verschlusseinrichtung (18) eine Griffmulde (3) angeordnet ist.

**Claims**

1. A device for inserting disc-shaped recording carriers (2) into a tape drive having a slot-shaped receiving guide (1) using a drive means (10) which is operable by means of a closure flap (4) and engages in a central opening (11) of the recording carrier (2) in the operating condition, wherein in the region of the rear end of the receiving guide a stop (13) is arranged which is displaceable against a spring force (12) by the recording carrier (2) and which, on insertion of the recording carrier, abuts against further catch stops (15) which are assigned to the operating position of the recording carrier, characterised in that the closure flap (4) has a closing spring element (5) which is so formed that, on closing of the closure flap (4), the closing spring element (5) first grips the recording carrier (2) and presses it towards the catch stop (15) against the stop spring force (12), and that, on further closing of the closure flap (4), the drive means (10) engages in the central opening (11) of the recording carrier (2), the displacement range of the stop (13) being such that in the open state of the closure flap (4), the recording carrier (2) projects from the receiving guide (1) in a defined gripping position.

2. An inserting device according to Claim 1, characterised in that the stop (13) is arranged on a guide strip (14) which carries the spring (12) and limits the displacement range by means of the catch stops.

3. An inserting device according to Claim 2, characterised in that the guide strip (14) is formed as a part of an adjusting plate (16) which is secured to the housing.

4. An inserting device according to one of Claims 1 to 3, characterised in that the closing spring element (5) on the closure flap (4) is arranged in a spring box (6) which is provided with guide bevels (7) for the recording carrier (2).

5. An inserting device according to one of Claims 1 to 4, characterised in that the closure flap (4), which can be pivoted against a spring force, extends centrally over the normally freely accessible receiving guide (1) at about a thumb's breadth.

6. An inserting device according to one of Claims 1 to 5, characterised in that on the closure flap (4) opposite the locking device (18), a gripping hollow (3) is arranged.

**Revendications**

1. Dispositif d'insertion pour des supports d'enregistrement (2) dans un mécanisme d'entraînement à guidage de réception (1) en forme de fente, avec mise en œuvre d'un dispositif d'entraînement (10) susceptible d'être entraîné par un volet d'obturation et pénétrant, à l'état de fonctionnement, dans une ouverture centrale (11) du support d'enregistrement (2), alors que dans la zone de l'extrémité postérieure du guidage de réception est prévue une butée (13) déplaçable par le support d'enregistrement (2), à l'encontre de la force d'un ressort (12) et se déplaçant, lors de l'insertion du support d'enregistrement, vers d'autres butées d'enclenchement (15) associées à des positions de fonctionnement supplémentaires, caractérisé par le fait que le volet d'obturation (4) comporte un élément élastique de fermeture (5) qui est réalisé de telle manière que lors de la fermeture du volet d'obturation (4), l'élément élastique de fermeture (5) saisit d'abord le support d'enregistrement (2) et l'applique contre la butée d'encliquetage (15), à l'encontre de la force du ressort de butée (12), et qu'ensuite, lors de la poursuite de la fermeture du volet d'obturation (4), le dispositif d'entraînement (10) s'engage dans l'ouverture centrale (11) du support d'enregistrement (2), la zone de déplacement de la butée (13) étant conçue de telle façon qu'à l'état ouvert du volet d'obturation (4), le support d'enregistrement (2) s'étend au-delà du guidage de réception (1) dans une position déterminée.

2. Dispositif d'insertion selon la revendication 1, caractérisé par le fait que la butée (13) est disposée sur une réglette de guidage (14) qui porte le ressort (12) et qui limite la plage de déplacement au moyen des butées d'enclenchement.

3. Dispositif d'insertion selon la revendication 2, caractérisé par le fait que la réglette de guidage (14) est réalisée sous la forme d'un élément constitutif d'une plaque de réglage (16) qui est fixée au boîtier.

4. Dispositif d'insertion selon l'une des revendications 1 à 3, caractérisé par le fait que l'élément élastique de fermeture (5) est disposé sur le volet d'obturation (4), dans un boîtier de ressort (6) qui est pourvu de biseaux de guidage (7) pour le support d'enregistrement (2).

5. Dispositif d'insertion selon l'une des revendications 1 à 4, caractérisé par le fait que le volet d'obturation (4) qui est susceptible d'être basculé à l'encontre de la force d'un ressort s'étend centralement selon environ la largeur d'un pouce sur le guidage de réception (1) qui autrement est accessible librement.

6. Dispositif d'insertion selon l'une des revendications 1 à 5, caractérisé par le fait qu'une cuvette de préhension (3) est disposée sur le volet d'obturation (4), en face du dispositif d'obturation.

FIG 1

FIG 2

# FIG 3